# EUROPEAN PATENT APPLICATION

(11) **EP 2 846 510 A1**
(43) Date of publication of application: **11.03.2015**
(21) Application number: 13306231.5
(22) Date of filing: 09.09.2013
(51) Int. Cl.: H04L 29/06

(54) **SRTP protocol extension**

(71) Applicant: ALCATEL LUCENT, 92100 Boulogne-Billancourt (FR)
(72) Inventor: Roche, Sebastien, 67400 Illkirch (FR); Degtounda, Marcel, 67400 Illkirch (FR)
(74) Representative: Mouney, Jérôme

(57) **Abstract**

For enhancing a Secure Real-time Transport Protocol (SRTP) session between a communication device (CD) and an application server (AS), the application server (AS):
negotiates at least two different cryptographic contexts with the communication device (CD),
stores a cryptographic context identifier (IdC) in correspondence with a set of cryptographic parameters for each negotiated cryptographic context,
activates a set of cryptographic parameters and producing a SRTP packet with a RTP payload encrypted by means of the activated set of cryptographic parameter.

## Description

### FIELD OF THE INVENTION

The present invention relates to channel security protocols such as Secure Real-time Transport Protocol (SRTP).

### BACKGROUND

Currently, it is impossible to have different level of encryption within the same SRTP stream.

To change the cryptographic context, one must also change the SRTP session. It means that if for any reason, the encryption method/strength must be changed, another SRTP session must be opened and negotiated. It implies a data flow disruption.

It may be very useful for resources management to be able to switch from one cryptographic context to another without data flow disruption in an SRTP session.

There is a need to overcome the drawbacks and limitations of the current SRTP protocol.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for enhancing a Secure Real-time Transport Protocol session between a communication device and an application server, comprising the following steps in the application server:
negotiating at least two different cryptographic contexts with the communication device,
storing a cryptographic context identifier in correspondence with a set of cryptographic parameters for each negotiated cryptographic context,
activating a set of cryptographic parameters and producing a SRTP packet with a RTP payload encrypted by means of the activated set of cryptographic parameters

Advantageously, the invention provides a solution to choose, during a session, different cryptographic parameters depending on the confidentiality of the data transmitted, in a file transfer or for a persistent connection.

The invention is particularly useful when central processing unit resources are limited, for example in embedded applications.

Different security levels can be used on customer's demand or enforced by the applications, which may greatly improve the system availability. It may allow to temporarily decrease the security level for some non critical applications at the benefit of the most critical ones allowing them to use more resources

Additionally, if for some applications the security is charged by an operator depending on the key length used, the client would have the choice between different levels of security and different pricings.

Another application may be to offer smart phone users the choice to dynamically switch on or off the encryption of a data stream during a connection (audio or video), depending on the central processing unit resources available, and the security needs.

In an embodiment, the SRTP packet includes a cryptographic element set to a value corresponding to the cryptographic context to be used.

In an embodiment, the communication device identifies a cryptographic context identifier by means of the value the cryptographic element included in the received SRTP packet, activates a set of cryptographic parameters associated with the cryptographic context identifier, and decrypts the encrypted RTP payload by means of the activated set of cryptographic parameters.

In an embodiment, the cryptographic element is located in the header of the SRTP packet.

In an embodiment, the cryptographic element is located in a four bytes field.

In an embodiment, the cryptographic element is located after the twelve first bytes of the header of the SRTP packet.

In an embodiment, the set of cryptographic parameters includes a compression type, an encryption type, and a message authentication code algorithm.

In an embodiment, the cryptographic contexts are negotiated via a key management mechanism.

The invention also pertains to a server for enhancing a Secure Real-time Transport Protocol session between a communication device and the server, comprising:
means for negotiating at least two different cryptographic contexts with the communication device,
means for storing a cryptographic context identifier in correspondence with a set of cryptographic parameters for each negotiated cryptographic context,
means for activating a set of cryptographic parameters and producing a SRTP packet with a RTP payload encrypted by means of the activated set of cryptographic parameters.

The invention also pertains to a computer program capable of being implemented within a server, said program comprising instructions which, when the program is executed within said server, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a network traffic inspection; and
- FIG. 2 is an algorithm of a method for enhancing a SRTP session according to one embodiment of the invention.

The same reference number represents the same element or the same type of element on all drawings.

### DESCRIPTION OF EMBODIMENTS

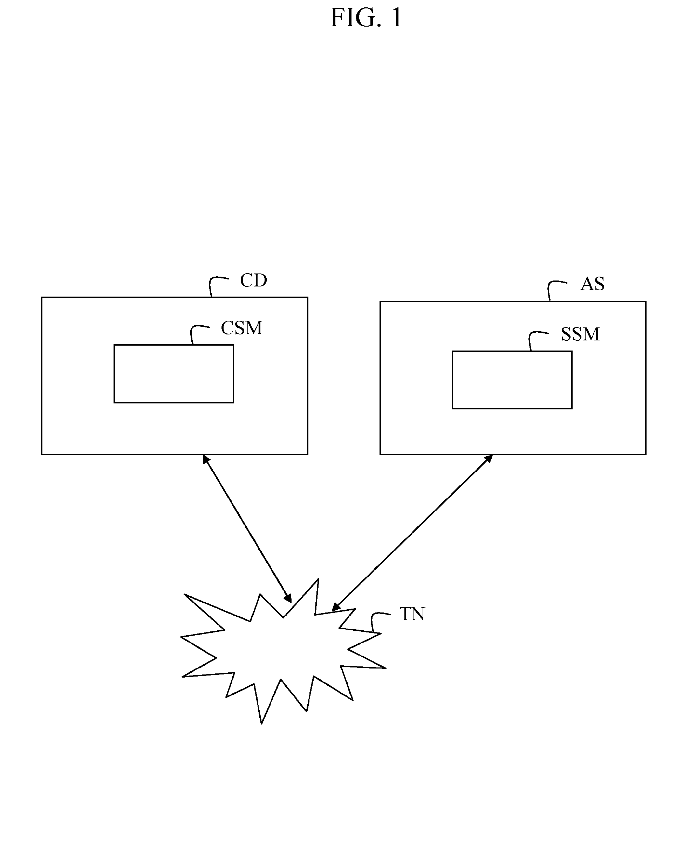

With reference to FIG. 1, a communication system according to the invention comprises a telecommunication network TN, a communication device CD and an application server AS, able to communicate between them through the telecommunication network.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

As an introduction, a few terms and concepts that are helpful for understanding the invention are defined below.

The Real-time Transport Protocol (RTP) defines a standardized packet format for delivering audio and video over IP networks. Especially, RTP is used in communication systems that involve streaming media, such as telephony or video teleconference applications.

The Secure Real-time Transport Protocol (SRTP) defines a profile of RTP, intended to provide at least encryption, message authentication and integrity to the RTP data in both unicast and multicast application.

The communication device CD and the application server AS have a client-server relationship, the communication device CD being able to interact as a client with the application server.

For example, the communication device CD can be a mobile phone, a landline phone, a computer and a variety of other user equipments for communication.

The communication device CD implements an application able to interact with another application implemented in the application server AS according to the TLS protocol.

As non limiting examples, the application can be a Web browser, a messaging client, a logging application, or a remote desktop client.

The communication device CD comprises a client security module CSM implementing an application having functionality to handle SRTP session with a server. Especially, client security module CSM manages a port for the connection with the application server.

The application server AS can be a web server implementing any application able to interact as a server with the client application implemented in the communication device CD. Especially, server security module SSM manages a port for the connection with the communication device.

The application server AS comprises a server security module SSM implementing an application having functionality to handle SRTP session with a client.

The application server AS and the communication device CD use a negotiation protocol to negotiate several cryptographic contexts.

A cryptographic context defines elements used for securing a communication, such as a cipher method and a key.

For example, the negotiation protocol can be a Session Description Protocol Security Description (SDES). During the negotiation, the keys are transported in the SDP (Session Description Protocol) attachment of a SIP

(Session Initiation Protocol) message. The SIP transport layer must make sure that no-one else can see the attachment, which can be done by using TLS (Transport Layer Security) transport layer for example.

The application server AS and the communication device CD know how many contexts are available for each of its own SRTP sessions.

The first cryptographic context negotiated becomes the default context.

Then the sender may choose any of the available cryptographic contexts in its session to encrypt the RTP payload.

To avoid any desynchronization or any glitch in the media flow, the information of the crypto context used must be present in each SRTP packet. If no information is present, the default context is used by the receiver to decrypt the payload.

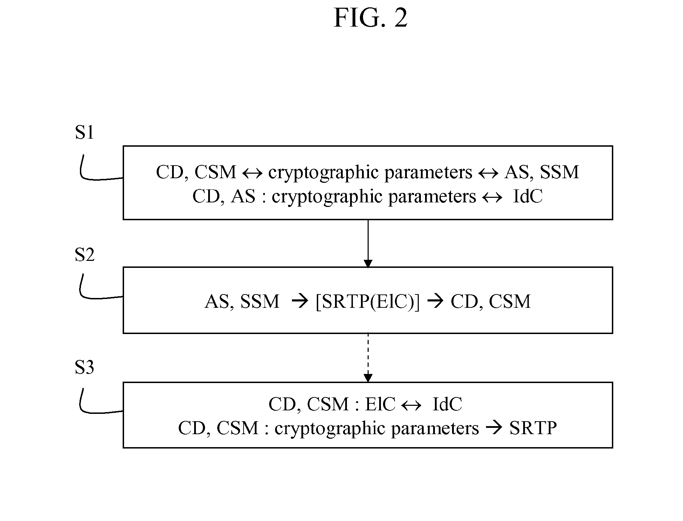

With reference to FIG. 2, a method for enhancing a SRTP session according to one embodiment of the invention comprises steps S1 to S3 executed within the communication system.

In step S1, the server security module SSM of the application server AS establishes a communication with the communication device CD according to the RTP protocol. The application server AS negotiates different cryptographic contexts with the communication device CD, via a key management mechanism, as defined in RFC 3711.

In one embodiment with the SIP protocol, SDES protocol is used to negotiate the different cryptographic contexts.

A cryptographic context is uniquely identified by the triplet context identifier: context id = <SSRC, destination network address, destination transport port number>;
where "SSRC" is the synchronization source, the destination network address and the destination transport port are the ones in the SRTP packet.

For each negotiation of a cryptographic context, each of the client security module CSM of the application server AS and the service security module SSM of the communication device CD stores a cryptographic context identifier IdC in correspondence with a set of cryptographic parameters relating to the cryptographic context.

Each cryptographic context identifier is associated with a value of a cryptographic element EIC included in all the SRTP packets exchanged between a communication device CD and an application server AS.

In step S2, the server security module SSM of the application server AS activates a set of cryptographic parameters and produces a SRTP packet with a RTP payload encrypted by means of the activated set of cryptographic parameters.

The server security module SSM sets the cryptographic element EIC of the SRTP packet to the value corresponding to the cryptographic context to be used.

The application server sends the SRTP packet to the communication device CD.

In step S3, the client security module CSM of the communication device CD identifies a cryptographic context identifier IdC by means of the value the cryptographic element EIC.

The communication device CD activates the set of cryptographic parameters associated with the cryptographic context identifier IdC.

For example, cryptographic parameters include the compression type, the encryption type, the message authentication code (MAC) algorithm.

The communication device CD is then able to decrypt the encrypted RTP payload by means of the activated set of cryptographic parameters.

In an illustrative example, the application server adds a new field in the SRTP header, which is usable by any existing profile, and which add the information of the cryptographic context to be used. This field is 4-bytes long for alignment needs, but only a few bits are really needed. One can safely reserve two bits for this feature, which gives three additional crypto contexts.

The additional bits in the field may be used in the future for different needs. The 4-bytes field is placed just after the 12 first bytes of the SRTP header as defined in RFC 3711.

The most significant bits of the new field are used for the cryptographic context. The value taken by the bits reserved for the cryptographic context (for example two bits) is used to indicate the context. The value 0 is used for the default context that was first negotiated, and the value 1 is used for the second one negotiated and so on.

I n another example, one marker bit (or possibly more) is used to indicate the cryptographic context to be used. This solution enforces both parties to agree by negotiation on the marker bits usage (other features may also require marker bits). To simplify the negotiation, the marker bits for the cryptographic context are always the most significant bits. So for example if two cryptographic contexts are available and the second cryptographic context is used, the client sets the most significant marker bit to the value 1. The value 0 would mean default and cryptographic crypto context.

Typically, the client and the server need to keep a connection opened to send notifications and other important data, which are generally not secret, and occasionally, they may need to send a secret notification or message. This solution avoids to use unnecessary processor power for other messages.

Advantageously, the proposed extension is interesting when a big amount of data has to be transmitted in a single connection, with only a small part of it needing the highest security. It could be for example a big file with only a small secret part, or for a data stream with only the highest security at some specific points in time (audio, video ...).

The proposed extension is particularly adequate for embedded telephonic systems (with limited processor resources) which need to assure secured exchanges: if the clients negotiates two sets of cryptographic parameters, they can choose to use one connection state or the other depending on the security needed. It can also be used by bigger servers delivering audio or video data streams to many clients, but with only some parts of the streams needing to be highly secured, the other parts being less sensitive.

The invention solution is of great interest in embedded systems which may need to save processing resources and at the same time ensure a high level of security for some of the data they exchange.

The invention is also interesting for data streams servers, when some parts of the stream must be secured, or for any client/server solution using permanent connections (keep-alive connections) or exchanging big files with only small secret parts.

In the future, the size of cryptographic keys will grow in parallel with the growth of processing power to always maintain secured transmissions. With this solution, the processing power in embedded systems needs not necessarily to follow this trend at the same rate, if only a fraction of the data exchanged needs to be at the highest security level: common data of low interest will not be better secured if it doesn't have to.

The invention described here relates to a method and a server for an extension of the SRTP protocol. According to one implementation of the invention, the steps of the invention are determined by the instructions of a computer program incorporated into a server, such as the application server. The program comprises program instructions which, when said program is loaded and executed within the server, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for enhancing a Secure Real-time Transport Protocol (SRTP) session between a communication device (CD) and an application server (AS), comprising the following steps in the application server (AS):
negotiating (S1) at least two different cryptographic contexts with the communication device (CD),
storing (S1) a cryptographic context identifier (IdC) in correspondence with a set of cryptographic parameters for each negotiated cryptographic context,
activating (S2) a set of cryptographic parameters and producing a SRTP packet with a RTP payload encrypted by means of the activated set of cryptographic parameters.

2. A method according to claim 1, whereby the SRTP packet includes a cryptographic element (EIC) set to a value corresponding to the cryptographic context to be used.

3. A method according to claim 2, whereby the communication device (CD) identifies a cryptographic context identifier (IdC) by means of the value the cryptographic element (EIC) included in the received SRTP packet, activates a set of cryptographic parameters associated with the cryptographic context identifier (IdC), and decrypts the encrypted RTP payload by means of the activated set of cryptographic parameters.

4. A method according to any of claims 2 to 3, whereby the cryptographic element (EIC) is located in the header of the SRTP packet.

5. A method according to claim to any of claims 2 to 4, whereby the cryptographic element (EIC) is located in a four bytes field.

6. A method according to any of claims 2 to 5, whereby the cryptographic element (EIC) is located after the twelve first bytes of the header of the SRTP packet.

7. A method according to any of claims 1 to 6, whereby the set of cryptographic parameters includes a compression type, an encryption type, and a message authentication code (MAC) algorithm.

8. A method according to any of claims 1 to 7, whereby the cryptographic contexts are negotiated via a key management mechanism.

9. A server (AS) for enhancing a Secure Real-time Transport Protocol (SRTP) session between a communication device (CD) and the server (AS), comprising:
means (SSM) for negotiating at least two different cryptographic contexts with the communication device (CD),
means (SSM) for storing a cryptographic context identifier (IdC) in correspondence with a set of cryptographic parameters for each negotiated cryptographic context,
means (SSM) for activating a set of cryptographic parameters and producing a SRTP packet with a RTP payload encrypted by means of the activated set of cryptographic parameters.

10. A computer program capable of being implemented within a server (AS) for enhancing a Secure Real-time Transport Protocol (SRTP) session between a communication device (CD) and the server (AS), said program comprising instructions which, when the program is loaded and executed within said server, carry out the following steps:
negotiating (S1) at least two different cryptographic contexts with the communication device (CD),
storing (S1) a cryptographic context identifier (IdC) in correspondence with a set of cryptographic parameters for each negotiated cryptographic context,
activating (S2) a set of cryptographic parameters and producing a SRTP packet with a RTP payload encrypted by means of the activated set of cryptographic parameters.

11. A system for enhancing a Secure Real-time Transport Protocol (SRTP) session between a communication device (CD) and an application server (AS), comprising:
means (CSM, SSM) for negotiating at least two different cryptographic contexts with the communication device (CD),
means (CSM, SSM) for storing a cryptographic context identifier (IdC) in correspondence with a set of cryptographic parameters for each negotiated cryptographic context,
means (CSM, SSM) for activating a set of cryptographic parameters and producing a SRTP packet with a RTP payload encrypted by means of the activated set of cryptographic parameters.
